# EUROPEAN PATENT SPECIFICATION

(11) **EP 0 528 534 B1**
(45) Date of publication and mention of the grant of the patent: **09.04.1997**
(21) Application number: 92306434.9
(22) Date of filing: 14.07.1992
(51) Int. Cl.: H02G 15/04

(54) **Electric cable barrier gland**
Kabelverschraubung mit Absperrung für elektrische Kabel
Presse-étoupe à arrêt pour câble électrique

(30) Priority: 20.07.1991 GB 9115726
(43) Date of publication of application: 24.02.1993
(73) Proprietor: HAWKE CABLE GLANDS LIMITED, Walsall Staffordshire WS9 8DS (GB)
(72) Inventor: Kennelly, Richard, Bolton, Lancashire BL2 4EX (GB)
(74) Representative: Knowles, Audrey Elizabeth

(56) References cited:
- EP-A- 0 024 917
- FR-A- 2 152 672
- FR-A- 2 295 598
- GB-A- 2 060 281
- GB-A- 2 104 306
- GB-A- 2 104 311

## Description

This invention concerns an electric cable barrier gland.

This invention has particular application to cable barrier glands of the type that are fitted to an electric cable to provide a barrier to prevent ingress of liquid, gas or solids into the interstices of the cable between the cable cores when the cable sheathing has been removed to enable the connection of the conductive elements of the cable cores to some electrical equipment or Installation.

It is already known to provide such a cable barrier gland in which a hardenable compound is used to fill the interstices between the cable cores and this compound is confined within a sleeve or pot through which the cores extend. Such barrier glands with filler compounds and sleeves or pots are described in our GB Patents Nos.2104306 and 2060281, and in FR-A-2 295 598 (& GB 1 524 683)

The assembly of and use of the compound in such barrier glands is critical to ensure integrity and continuity in the barrier to meet specified performance requirements that have to be met when, as is common, such barrier glands are used in hazardous fire risk installations. Various practical problems arise due to field conditions and the only way to test for performance requirements is by destructive methods.

In use of the compound material, this presents difficulties in the field because such compound is normally made up from two separate materials which have to be mixed together, one being a resin and the other being a catalyst hardener. The mixture is of a putty-like consistency but ambient temperature variations effect consistency and hardening or curing times, and handling of the materials may be under adverse or extraordinary field conditions. It is sometimes not possible to ensure adequate mixing or blending of the materials and it is not possible to check that all of the interstices around the cores are filled by the mixture without destruction of the gland.

FR-A-2152672 (& GB 1383573) discloses a rigid two-piece body for encapsulating a cable splice or joint in a resin compound contained in the body with a crush resistant open porous liner attached to the body to prevent the ends of the cable joint contacting the body. The body and liner may be clear and transparent so that the operation of filling the body with a self-curing liquid resin can be checked visually to avoid any unfilled spots.

It is an object of this invention to provide an improved electric cable barrier gland by the construction of which such difficulties can be alleviated in a simple and effective manner.

According to the present invention there is provided an electric cable barrier gland for a cable having a sheath enclosing at least one conductor core, the gland comprising an entry body, a compression body engageable with the entry body, a sealing member engageable with the compression body, and a barrier sleeve located in the entry body for containing a hardenable compound disposable in the barrier sleeve to fill the sleeve and surround the core of a cable extending therethrough in the assembled gland with the barrier sleeve being removable from the entry body with the compound in a hardened condition characterised in that the barrier sleeve has a transparent or translucent sleeve portion such that the disposition of the hardened compound within the barrier sleeve can be seen through the translucent or transparent sleeve portion on removal of the barrier sleeve from the entry body.

By this feature of the transparent or translucent portion of the barrier sleeve, a visible check on the disposition of the compound can be carried out either during assembly of the gland, or after by disassembly of the completed gland once the compound has hardened. Such visible check will show any discontinuities in the packing of the compound around the core, and any inconsistencies in the mixing of the compound by streaking or non-uniform colouration.

Advantageously, the transparent or translucent sleeve portion of the barrier sleeve is a hollow thin tubular wall, preferably cylindrical, received within a complementary bore in the entry body.

By this arrangement, the check on the packing of the compound around the core can be made either prior to inserting the barrier sleeve in the entry body, or, by simple disassembly of the gland after hardening of the compound and sliding the barrier sleeve away from the entry body.

The barrier sleeve may be made of a suitable rigid plastics material having characteristics for this application and use in hazardous or flameproof installations. Preferably, the plastics material should be resistant to cracking or melting in the range -20°C to 90°C. In addition, the plastics material should not be readily combustible. Suitable plastics materials include polycarbonates.

The barrier sleeve may be a moulding of selected plastics material.

A seal may be provided to seal the barrier sleeve to the entry body.

By this arrangement of the seal between the barrier sleeve and the entry body, there is no gap providing a flame path from the entry body along the length of the cable along the exterior of the barrier sleeve.

Preferably, the gland further comprises a hollow ferrule member through which the cable extends with the compound also disposed therewithin.

The ferrule is arranged to be located relative to the barrier sleeve and the entry body by the engagement of the compression body with the entry body.

Preferably, the gland further comprises a clamping ring arranged to seat over a complementary shaped face on that end of the ferrule remote from the barrier sleeve with an armour or earth element of the cable sheath clamped therebetween by the engagement of the compression body with the entry body.

The sealing member of the gland comprises a seal nut mounting a cable seal engaging the external face of the cable sheath with the seal nut in threaded engagement with the compression body.

By this arrangement of the various parts of the barrier gland, the barrier sleeve and the ferrule extend co-axially and the core with the compound therearound are enclosed thereby so that on assembly of the gland with the compound mixture in place prior to hardening, the tightening of the compression body on the entry body applies pressure to the compound mixture confined around the core.

Other particular features of the invented barrier gland will be explained later herein with reference to an exemplary embodiment showing a simple arrangement with a cable having two conductor cores.

As will be appreciated, cables may be of different types with various kinds of sheath and numbers of conductor cores and, in some cases with separate earthing conductors. Furthermore, dependent on the type of electrical equipment for which the barrier gland is to be connected and used, various designs or styles of entry body may be required. However, this invention with the barrier sleeve having the transparent or translucent portion can be used with a wide range of cables and fittings whilst achieving the advantages of visual inspection as mentioned previously.

An exemplary embodiment of a cable barrier gland according to this invention will now be described with reference to the accompanying drawings wherein:-
FIGURE 1 is a longitudinal section through an assembled "made-off" barrier gland in which the compound is in situ;
FIGURE 2 is a section similar to that of Figure 1 with certain parts omitted for clarity;
FIGURE 3 is a cross-sectional view in the plane A-A of Figure 2;
FIGURE 4 is an exploded sectional view of the component parts for the gland entry side of the gland; and
FIGURE 5 is an exploded sectional view of the component parts for the cable seal and compression side of the gland.

With reference to the accompanying drawings, in this exemplary embodiment, the electric cable 1 comprises two conductor cores 2a,2b surrounded by an inner sheath 3 and, in known manner packing or filling material would separate the cores 2a,2b within the inner sheath 3. An armour or earthing element 4 extends between the inner sheath 3 and an outer sheath 5. As will be appreciated by those familiar with this field, there are various types and sizes of cable with different numbers of cores, and the cable 1 is only one type to which this invention has application.

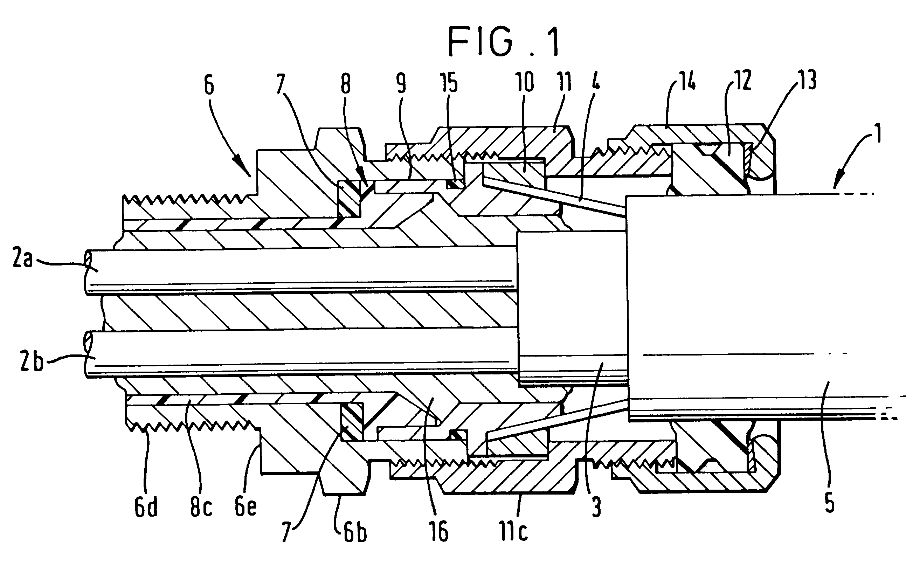

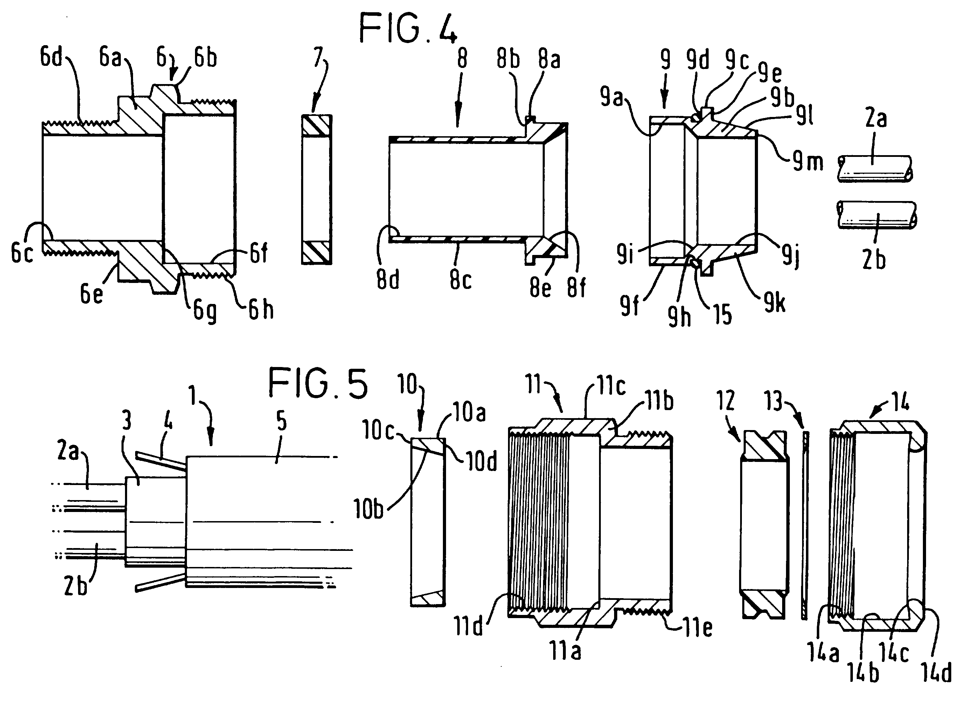

As shown in Figure 4, on the entry side of the gland the component parts comprise an entry adaptor 6, a barrier seal 7, a barrier sleeve 8 and a ferrule 9 which are for assembly on the entry side of electrical equipment (not shown). On the cable seal and compression side, the component parts as shown in Figure 5 comprise a clamping ring 10, a compression nut 11, a cable seal 12 with washer 13 and a seal nut 14 in the form of an end cap. All of these parts are arranged and adapted to be co-axially assembled around the cable 1 to provide the completed "made-off" barrier gland as depicted in Figure 1 and as will be described later herein.

The entry adaptor 6 has an annular body portion 6a formed with a flatted flange 6b for engagement by a spanner or like tool to rotate the adaptor. One end of the adaptor 6 has a cylindrical bore 6c and an external male thread 6d terminating in a shoulder 6e. This one end of the adaptor 6 is for threaded engagement with a complementary threaded bore or bushing (not shown) in the electrical equipment in known manner. The other end of the adaptor 6 has a coaxial counterbore 6f terminating in an internal shoulder 6g with this end having an external thread 6h.

The barrier seal 7 is of annular form sized to fit on the barrier sleeve 8 and is of suitable elastomeric or resilient material such as Neoprene or Silicone. The outer diameter of the seal 7 is complementary to the counterbore 6f and in the assembled gland the seal 7 is arranged to seat against the shoulder 6g.

The barrier sleeve 8 is made of a strong plastics rigid material such as clear polycarbonate. The sleeve 8 may be machined from a rod of plastics material or it can be a moulding. The barrier sleeve 8 has an annular flange 8a extending from a shoulder 8b. A sleeve portion 8c of relatively thin wall thickness extends from the shoulder 8b with the outer diameter being a sliding fit in the bore 6c of the entry adaptor 6. The seal 7 fits over the sleeve portion 8c and in the assembled gland (Figure 1) the seal 7 is seated between the shoulders 6g and 8b. The plastics material is selected so that the thin wall of the sleeve portion 8c is transparent or translucent so that the user on assembly or an inspector can view the compound material 16 or cores 2a,2b located within the bore 8d of the barrier sleeve 8.

The end of the barrier sleeve 8 opposed to the sleeve portion 8c is larger than the sleeve portion 8c and provides a cylindrical outer face 8e of diameter complementary to an inner bore 9a of the ferrule 9. This end of the barrier sleeve 8 has a frusto-conical shaped entry bore 8f tapering into the sleeve bore 8d.

The ferrule 9 has a body 9b from which extends an annular flange 9c providing opposed radial abutment faces 9d and 9e. The ferrule 9 has a tubular portion 9f extending from the flange 9c and adjacent to the flange 9c there is an external annular recess 9h seating an O-ring seal 15. The outer diameter of the portion 9f is complementary to the bore 6f of the adaptor 6 so that in the assembled gland (Figure 1) the tubular portion 9f is received and engaged between one end of the adaptor 6 and one end of the barrier sleeve 8.

The cylindrical bore 9a of the ferrule 9 leads to a tapered portion 9i leading to a smaller cylindrical entry bore 9j to which, in use the cable 1 is presented. The entry bore 9j is in an entry portion 9k extending from the flange 9c with the portion 9k having an external clamp face 91 which is of frusto-conical shape tapering from the flange 9c to the end face 9m of ferrule.

With reference now to Figure 5, there is shown the clamping ring 10 which has a cylindrical outer face 10a and a tapering inner clamp face 10b complementary to the clamp face 91 of the ferrule 9. The clamping ring 10 has opposed abutment faces 10c and 10d arranged for respective engagement in the assembled gland with radial abutment face 9e of the ferrule 9 and an internal shoulder 11a of the compression nut 11.

The compression nut 11 has a body 11b formed with flats 11c for engagement by a spanner or the like. One end of the nut 11 has an internal thread lid for threaded engagement with the thread 6h of the adaptor 6, and the other end of the nut 11 has an external thread lie for engagement with the internal thread 14a of the end cap nut 14.

The cable seal 12 with the washer 13 are arranged to be seated in an annular recess 14b within the end cap nut 14. The washer 13 abuts against the inner face 14c of an inward lip 14d at one end of the end cap nut 14 through which the cable 1 is first entered in use during assembly of the gland.

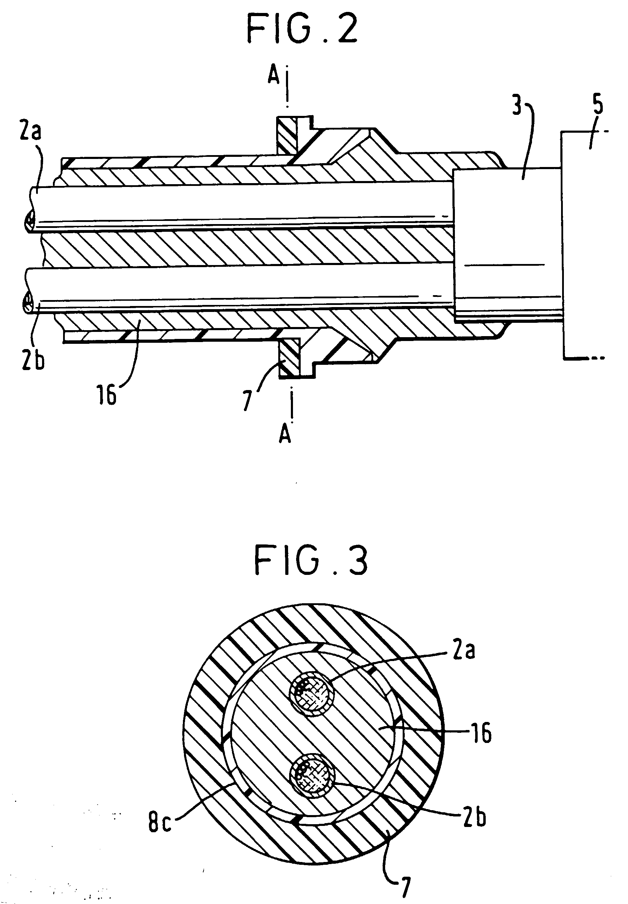

In addition to the component parts of the gland as just described, there is the hardenable compound which is provided by two materials to be mixed together. Usually the materials are an epoxy resin and a hardener, and these have to be carefully mixed together by hand in a quantity sufficient to fill the space within the gland to form a barrier. The compound barrier 16 is shown in Figures 1, 2 and 3 of the drawings.

The assembly and use of the invented barrier gland will now be described.

In order to connect the cable 1 to the electrical equipment, the cable 1 is laid out and allowing for the required lengths of cores 2a,2b these are exposed cutting back the outer sheath 5, exposing the armour or earthing element 4 and then cutting back the inner sheath 3 so that it projects beyond the outer sheath 5.

The end cap nut 14 with seal 12 and washer 13 assembled therein together with the compression nut 11 loosely threaded thereto are slid over the cable 1 to fit on the outer sheath and clear of the inner sheath 3 and cores 2a,2b. The clamping ring 10 is located over the exposed armour or earth element 4 which is spread outwardly and trimmed back. At this stage the ferrule 9 may be brought into place temporarily to assist in correctly locating and trimming the element 4 as spread around the face 9l but trimmed so as to clear the abutment face 9e and not extending beyond the abutment face 10c of the clamping ring.

The cores 2a,2b are spread apart and the mixed two part compound material which has a consistency of putty or plasticine is applied into the crutch between the cores 2a,2b. The cores 2a,2b are then brought back towards each other and the compound material is packed carefully around the cores 2a,2b to avoid any voids and moulded into a sausage like shape. Once this has been done and within the time limit before the compound material starts to harden, the barrier sleeve 8 with seal 7 is presented with the entry bore 8f facing the free ends of the cores 2a,2b and is pushed over the cores 2a,2b with the compound packed therearound.

After cleaning away any excess compound exuding onto the external face of the barrier sleeve 8 and the seal 7, the free ends of the cores 2a,2b are passed through the entry adaptor 6 which has been screwed into the electrical equipment (not shown). The sleeve portion 8c of the barrier sleeve 8 is slid into the entry adaptor 6 to engage within the complementary bore 6c thereof with the seal 7 being between the shoulder 6g and the sleeve shoulder 8b. The end of the sleeve 8 having the entry bore 8f is pushed into engagement within the tubular portion 9f of the ferrule 9 with the sleeve 8 sitting within the internal bore 9a whilst the portion 9f is received within the internal bore 6f of the entry adaptor 6.

Once the parts are so loosely assembled and located, the compression nut 11 with the clamping ring 10 is then screwed into engagement with the thread 6h of the entry adaptor 6. On initial tightening of the compression nut 11, the parts are brought together axially so that the flange 8a of the barrier sleeve 8 abuts the end face of the ferrule portion 9f and the barrier seal 7 is compressed. Thereafter the abutment face 9d of the ferrule engages the end face of the entry adaptor 6 with the O-ring seal 15 in sealing engagement between the ferrule 9 and the internal bore 6f of the entry adaptor 6.

As the compression nut 11 is tightened up the mastic compound material is subjected to pressure with a squeezing action so that it is compressed around the cores 2a,2b. Any excess compound exudes axially to extend along the cores 2a,2b and cover the exposed inner sheath 3 to provide the barrier of compound 16 within the gland. This squeezing action and the exudation of the compound material is not visible to the assembler, and the assembled gland has to be left in this condition for the required period specified for hardening of the compound.

After the compound has hardened, the integrity of the barrier 16 formed around the cores 2a,2b by the compound can be checked or verified by unscrewing the compression nut 11 and pulling the assembly with the barrier sleeve 8 away from the entry adaptor 6. Once the barrier sleeve 8 is clear of the entry adaptor 6, the disposition and condition of the compound 16 is visible through the translucent sleeve portion 8c and any voids or discontinuities or discrepancies in the compound barrier can be seen. By such visible inspection, an important safeguard check can be made avoiding destructive testing.

Conveniently, the visible check can be done if required before the final connection to the electrical equipment. After such check, the assembly is completed by bringing the cable seal 12 and the seal nut 14 into threaded engagement with the external thread 11e of the compression nut 11.

Alternatively, for on-site inspection of an installation, the visible check can be carried out by partial disassembly of the gland thereby avoiding expensive destructive checks.

The shape and axial length of barrier sleeve may be adapted to suit various types of entry adaptor provided that the transparent or translucent sleeve portion is retained and through which the disposition of the compound is visible.

As will be appreciated, various modifications to the arrangement and type of compression nut and/or cable seal member with end cap nut and/or armour clamping ring and/or earthing connection are envisaged. Alternative types of cable seal may be used depending on the kind of cable sheath and any desired type of end cap nut. Furthermore, the O-ring seal on the ferrule may be omitted in certain arrangements.

## Claims

1. An electric cable barrier gland for a cable having a sheath enclosing at least one conductor core, the gland comprising an entry body (6), a compression body (11) engageable with the entry body (6), a sealing member (14) engageable with the compression body (11), and a barrier sleeve (8) located in the entry body (6) for containing a hardenable compound (16) disposable in the barrier sleeve (8) to fill the sleeve (8) and surround the core (2a,2b) of a cable (1) extending therethrough in the assembled gland with the barrier sleeve (8) being removable from the entry body (6) with the compound (16) in a hardened condition **characterised in that** the barrier sleeve (8) has a transparent or translucent sleeve portion (8c) such that the disposition of the hardened compound (16) within the barrier sleeve (8) can be seen through the translucent or transparent sleeve portion (8c) on removal of the barrier sleeve (8) from the entry body (6).

2. A gland according to Claim 1 characterised in that the transparent or translucent sleeve portion (8c) is a hollow thin tubular wall (8c), preferably cylindrical, received within a complementary bore (6c) in the entry body (6).

3. A gland according to Claim 1 or Claim 2 characterised in that the barrier sleeve (8) is made of a rigid plastics material, for example polycarbonate, that is resistant to cracking or melting in the range -20°C to 90°C and/or is fire resistant.

4. A gland according to any one of the preceding Claims characterised in that a seal (7) is provided to seal the barrier sleeve (8) to the entry body (6).

5. A gland according to any one of the preceding Claims characterised in that the gland further comprises a hollow ferrule member (9) through which the cable (1) extends in the assembled gland with hardenable compound (16) also disposable therewithin.

6. A gland according to Claim 5 characterised in that the ferrule member (9) is arranged to be located relative to the barrier sleeve (8) and the entry body (6) by engagement of the compression body (11) with the entry body (6).

7. A gland according to Claim 5 or Claim 6 characterised in that the gland further comprises a clamping ring (10) arranged to seat over a complementary shaped face (91) on that end of the ferrule (9) remote from the barrier sleeve (8) for clamping an armour or earth element (4) of the cable sheath (3,5) therebetween by the engagement of the compression body (11) with the entry body (6) in the assembled gland.

8. A gland according to any one of the preceding Claims characterised in that the sealing member (14) comprises a seal nut (14) mounting a cable seal (12) engageable with the external face of the cable sheath (5) in the assembled gland.

## Patentansprüche

1. Elektrische Kabelverschraubung mit Absperrung für ein Kabel, welches eine mindestens einen Leiterkern umschliessende Hülle aufweist, wobei die Kabelverschraubung einen Eingangskörper (6), einen Druckkörper (11) der mit dem Eingangskörper (6) in Eingriff bringbar ist, einen Dichtungsteil (14) der mit dem Druckkörper (11) in Eingriff bringbar ist, und eine Sperrhülse (8) aufweist, die in dem Eingangskörper (6) angeordnet ist und der Aufnahme einer aushärtbaren Verbindung (16) dient, welche in der Sperrhülse (8) anordenbar ist, um die Hülse (8) zu füllen und um den Kern (2a, 2b) eines Kabels (1), welches sich durch diese in der zusammengebauten Kabelverschraubung erstreckt, zu umgeben, wobei die Sperrhülse (8) aus dem Eingangskörper (6) mit der Verbindung (16) in einem ausgehärteten Zustand herausnehmbar ist, dadurch gekennzeichnet, daß die Sperrhülse (8) einen transparenten oder durchscheinenden Hülsenabschnitt (8c) aufweist, derart daß die Anordnung der ausgehärteten Verbindung (16) in der Sperrhülse (8) durch den transparenten oder durchscheinenden Hülsenabschnitt (8c) beim Entfernen der Sperrhülse (8) aus dem Eingangskörper (6) sichtbar ist.

2. Kabelverschraubung nach Anspruch 1, dadurch gekennzeichnet, daß der transparente oder durchscheinende Hülsenabschnitt (8c) eine hohle, dünne, rohrförmige Wandung (8c), bevorzugt zylindrisch, ist, welche in einer komplimentär ausgebildeten Bohrung (6c) des Eingangskörpers (6) angeordnet ist.

3. Kabelverschraubung nach Anspruch 1 oder 2, dadurch gekennzeichnet, daß die Sperrhülse (8) aus einem starren Kunststoffmaterial, beispielsweise Polykarbonat hergestellt ist, welches gegen Brechen oder Schmelzen in dem Bereich von -20 °C bis 90° C widerstandsfähig und/oder feuerwiderstandsfähig ist.

4. Kabelverschraubung nach einem der vorstehenden Ansprüche, dadurch gekennzeichnet, daß eine Dichtung (7) vorgesehen ist, um die Sperrhülse (8) gegen den Eingangskörper (6) abzudichten.

5. Kabelverschraubung nach einem der vorstehenden Ansprüche, dadurch gekennzeichnet, daß die Kabelverschraubung ferner einen hohlen Ringteil (9) aufweist, durch welchen sich das Kabel (1) in der zusammengebauten Kabelverschraubung erstreckt, wobei innerhalb eine härtbare Verbindung (16) anordenbar ist.

6. Kabelverschraubung nach Anspruch 5, dadurch gekennzeichnet, daß der Ringteil (9) derart ausgebildet ist, daß er bezüglich der Sperrhülse (8) und dem Eingangskörper (6) durch Eingriff des Druckkörpers (11) innerhalb des Eingangskörpers (6) festlegbar ist.

7. Kabelverschraubung nach Anspruch 5 oder 6, dadurch gekennzeichnet, daß die Kabelverschraubung ferner einen Klemmring (10) aufweist, welcher derart ausgebildet ist, daß er über einer komplimentär geformten Fläche (91) auf demjenigen Ende des Ringkörpers (9) sitzt, welches von der Sperrhülse (8) entfernt liegt, um dadurch eine Armierung oder Erdelement (4) der Kabelhülle (35) durch Eingriff des Druckkörpers (11) mit dem Eingangskörper (6) in der zusammengebauten Kabelverschraubung zwischen diesen Teilen einzuklemmen.

8. Kabelverschraubung nach einem der vorstehenden Ansprüche, dadurch gekennzeichnet, daß der Dichtteil (14) eine Dichtmutter (14) enthält, welche eine Kabeldichtung (12) aufnimmt, die mit der Außenfläche einer Kabelhülle (5) in der zusammengebauten Kabelverschraubung in Eingriff bringbar ist.

## Revendications

1. Presse-étoupe barrière pour câble électrique, comportant une gaine entourant au moins une âme de conducteur, le presse-étoupe comprenant un corps d'entrée (6), un corps de compression (11) susceptible de s'engager sur le corps d'entrée (6), un élément d'étanchéité (14) susceptible de s'engager sur le corps de compression (11), et un manchon barrière (8) disposé dans le corps d'entrée (6) et qui contient un composé durcissable (16) qui peut être agencé dans le manchon barrière (8) pour remplir le manchon (8) et entourer l'âme (2a, 2b) d'un câble s'étendant à travers le presse-étoupe assemblé, le manchon barrière (8) pouvant être retiré du corps d'entrée (6) avec le composé (16) à l'état durci, caractérisé en ce que le manchon barrière (8) présente une partie de manchon transparente ou translucide (8c) telle que la disposition du composé durci (16) à l'intérieur du manchon barrière (8) puisse être observé à travers la partie de manchon transparente ou translucide (8c) lors du retrait du manchon barrière (8) du corps d'entrée (6).

2. Presse-étoupe selon la revendication 1, caractérisé en ce que la partie de manchon transparente ou translucide (8c) est une paroi tubulaire (8c) mince et creuse, de préférence cylindrique, reçue à l'intérieur d'un orifice complémentaire (6c) du corps d'entrée (6).

3. Presse-étoupe selon la revendication 1 ou 2, caractérisé en ce que le manchon barrière (8) est constitué d'une matière plastique rigide, par exemple un polycarbonate, qui résiste au fissurage ou à la fusion dans une plage de températures de -20 à 90°C et/ou résiste au feu.

4. Presse-étoupe selon l'une quelconque des revendications précédentes, caractérisé en ce qu'un joint étanche (7) est appliqué pour étancher le manchon barrière (8) vis-à-vis du corps d'entrée (6).

5. Presse-étoupe selon l'une quelconque des revendications précédentes, caractérisé en ce que le presse-étoupe comprend par ailleurs un élément creux de type virole (9) à travers lequel le câble (1) s'étend dans le presse-étoupe assemblé et à l'intérieur duquel peut également être disposé le composé durcissable (16).

6. Presse-étoupe selon la revendication 5, caractérisé en ce que l'élément de virole (9) est agencé de manière à être positionné par rapport au manchon barrière (8) et au corps d'entrée (6) par engagement du corps de compression (11) sur le corps d'entrée (6).

7. Presse-étoupe selon la revendication 5 ou 6, caractérisé en ce que le presse-étoupe comprend un anneau de blocage (10) agencé pour reposer sur une face de forme complémentaire (91) sur l'extrémité de la virole (9) opposée au manchon barrière (8) pour immobiliser un élément de blindage ou de terre (4) de la gaine (3, 5) du câble entre eux par l'engagement du corps de compression (11) sur le corps d'entrée (6) dans le presse-étoupe assemblé.

8. Presse-étoupe selon l'une quelconque des revendications précédentes, caractérisé en ce que l'élément d'étanchéité (14) comprend un écrou d'étanchéité (14) dans lequel est monté un joint étanche de câble (12) susceptible de s'engager sur la face externe de la gaine (5) du câble dans le presse-étoupe assemblé.
